# EUROPÄISCHE PATENTSCHRIFT

(11) **EP 2 798 319 B1**
(45) Veröffentlichungstag und Bekanntmachung des Hinweises auf die Patenterteilung: **16.09.2015**
(21) Anmeldenummer: 12805615.7
(22) Anmeldetag: 22.11.2012
(51) Int. Cl.: G01F 23/296, G01N 9/00, G01N 11/16

(54) **VORRICHTUNG ZUR BESTIMMUNG UND/ODER ÜBERWACHUNG MINDESTENS EINER PROZESSGRÖSSE**
DEVICE FOR DETERMINING AND/OR MONITORING AT LEAST ONE PROCESS VARIABLE
DISPOSITIF DE DÉTERMINATION ET/OU DE SURVEILLANCE D'AU MOINS UNE GRANDEUR DE PROCESSUS

(30) Priorität: 28.12.2011 DE 102011090014
(43) Veröffentlichungstag der Anmeldung: 05.11.2014
(73) Patentinhaber: Endress+Hauser GmbH+Co. KG, 79689 Maulburg (DE)
(72) Erfinder: BAUER, Max, 79618 Rheinfelden (DE); BRENGARTNER, Tobias, 79312 Emmendingen (DE); URBAN, Martin, 79541 Lörrach (DE); SIEGEL, Michael, 76185 Karlsruhe (DE)
(74) Vertreter: Andres, Angelika Maria
(86) Internationale Anmeldenummer: PCT/EP2012/073380
(87) Internationale Veröffentlichungsnummer: WO 2013/097990

(56) Entgegenhaltungen:
- EP-A1- 0 048 580
- EP-A1- 0 463 964
- DE-A1- 19 720 519
- DE-A1-102010 030 791

## Beschreibung

Die vorliegende Erfindung betrifft eine Vorrichtung zur Bestimmung und/oder Überwachung mindestens einer Prozessgröße mit einer mechanisch schwingfähigen Einheit. Bei der Prozessgröße handelt es sich beispielsweise um den Füllstand, die Dichte, oder die Viskosität eines Mediums in einem Behälter.

Im Stand der Technik sind so genannte Schwinggabeln bekannt, welche zur Überwachung eines Grenzstands einer Flüssigkeit in einem Behälter, oder zu Dichte- oder Viskositätsmessung dienen. Die mechanisch schwingfähige Einheit in Form der Schwinggabel wird von einer elektrodynamischen, insbesondere induktiven oder piezoelektrischen Wandlereinheit zu resonanten mechanischen Schwingungen angeregt. Es sind Wandlereinheiten mit nur einem Piezoelement (z.B. DE 3931453 C1), aber auch Wandlereinheiten mit jeweils mindestens einem Anregepiezo und einem Empfangspiezo (z.B. DE 19720519 A1) bekannt. Bei induktiven Antriebssystemen dienen zwei getrennte Spulen als Sender und Empfänger. Nachteilig bei derartigen Antriebssystemen ist, dass die durch die Sendespule induzierte Spannung in der Empfangsspule das eigentliche Messsignal stark überlagert.

Zur Füllstandsmessung wird beispielsweise detektiert, ob die Schwingfrequenz bei resonanter Anregung unterhalb oder oberhalb einer vorgegebenen Grenzfrequenz liegt. Übersteigt die Schwingfrequenz die Grenzfrequenz, schwingt die schwingfähige Einheit in Luft; unterschreitet die Schwingfrequenz die Grenzfrequenz, ist die schwingfähige Einheit mit Medium bedeckt.

Bei der so genannten Ein-Piezo-Technologie dient dasselbe Piezoelement als Sender und Empfänger der mechanischen Schwingungen der schwingfähigen Einheit. Zur Beaufschlagung des Piezoelements dient in der Regel eine elektrische Wechselspannung in Form eines Rechtecksignals. Bei der Beaufschlagung eines Piezoelements mit einem solchen Rechtecksignal wird die Piezokapazität jeweils an den Flanken des Rechtecksignals umgepolt. Hierdurch entstehen Lade- und Entladeströme. Zusätzlich fließt ein den mechanischen Bewegungen entsprechender elektrischer Strom. Zur Auswertung der mechanischen Schwingungen wird der resultierende Strom über einen Widerstand in eine Spannung umgewandelt. Die Lade- und Entladeströme stellen bei der Auswertung unerwünschte Störsignale dar.

In der Offenlegungsschrift DE 19720519 A1 wird vorgeschlagen, diese Störsignale durch einen Referenzkondensator zu kompensieren, welcher parallel zu dem Wandlerelement geschaltet ist und mit dem gleichen Anregungssignal wie dieses beaufschlagt wird. Der Referenzkondensator ist hierbei derart abgeglichen, dass seine Kapazität derjenigen des Wandlerelements entspricht, wodurch der Referenzkondensator das gleiche Lade- und Entladeverhalten wie das Wandlerelement aufweist. Durch Subtraktion der am Wanderelement und am Referenzkondensator abgegriffenen Spannungen wird ein Signal erhalten, das nur die Information über die mechanischen Schwingungen trägt. Problematisch bei dieser Lösung ist das unterschiedliche Temperatur- und Alterungsverhalten von Wandlerelement und Referenzkondensator.

Aus der Offenlegungsschrift DE 102008050266 A1 ist eine Schwinggabel bekannt, bei welcher an Stelle des Referenzkondensators ein piezoelektrisches Kompensationselement in einen Parallelzweig eingebracht ist. Alterungs- und Temperaturverhalten sind daher jeweils gleich. Unterscheiden sich die Temperatur des Wandlerelements und die des Kompensatiönselements, unterscheiden sich jedoch die Zeitkonstanten der beiden Elemente und eine vollständige Kompensation ist nicht möglich.

In der Offenlegungsschrift EP0463964A1 ist ein Sende/Empfangs-Ultraschallsystem beschrieben, mit einem piezoelektrischen Wandler zumindest zum Emittieren von Ultraschallwellen, mit einem Stromgenerator, mittels welchem der piezoelektrische Wandler angeregt wird, und mit elektronischen Verarbeitungsmitteln, welche dazu ausgestaltet sind, zumindest ein Anregesignal des Stromgenerators zu bestimmen und zu speichern. Das Anregesignal wird mit einem Referenzobjekt kombiniert was eine spezifische Form der detektierten Ultraschallwellen nach der Wechselwirkung mit der von dem Wandler erzeugten Ultraschallwelle zur Folge hat.

Aus der Offenlegungsschrift DE 102008050266 A1 ist ein Flüssigkeitsspeicher sowie eine Vorrichtung zur volumetrischen Messung einer Flüssigkeit in einem Behälter und zur Abgabe von Flüssigkeit daraus mit einem Referenzwandler bestehend aus einem UltraschallSender/Empfänger einem Zielreflektor und einer zugeordneten Speicheranordnung bekannt geworden. Der Ultraschall-Sender/Empfänger wird in einem definierten Abstand vom Zielreflektor angeordnet und die Laufzeit zwischen Ultraschall-Sender/Empfänger und Zielreflektor als Kalibration für die eigentliche Messung verwendet.

In der bislang noch nicht veröffentlichten deutschen Patentanmeldung mit dem Aktenzeichen 102010030791.2 ist ein System mit einem Kompensationselement aus einem regelbaren Widerstand und einem fest eingestellten Kondensator beschrieben, wobei die Zeitkonstante des Kompensationselements mittels des regelbaren Widerstands permanent an diejenige des Wandlerelements angepasst wird.

Diese Ausgestaltung bietet weiterhin die Möglichkeit der Erfassung der Temperatur des Wandlerelements. Die Kenntnis der Temperatur ist zur Erhöhung der Messgenauigkeit der Vorrichtung vorteilhaft. Beispielsweise ändert sich die Steifigkeit der schwingfähigen Einheit und hiermit auch die Resonanzfrequenz, Schwingungsamplitude und Phasenverschiebung zwischen Anregungssignal und Empfangssignal mit der Temperatur. Die Temperaturabhängigkeit der Schwingungseigenschaften führt zu einer temperaturabhängigen Messgenauigkeit der Vorrichtung. Bei Kenntnis der Temperatur kann beispielsweise die Grenzfrequenz bei der Füllstandsüberwachung entsprechend angepasst werden.

Die Aufgabe der Erfindung besteht darin, eine Vorrichtung eingangs genannter Art bereit zu stellen, welche eine weiter erhöhte Messgenauigkeit aufweist.

Die Aufgabe wird von einer Vorrichtung gemäß dem Oberbegriff des Anspruchs 1 dadurch gelöst, dass die elektromechanische Wandlereinheit ein zweites Bauelement mit elektrisch einstellbarer Größe aufweist.

Die Vorrichtung zur Bestimmung und/oder Überwachung mindestens einer Prozessgröße eines Mediums in einem Behälter besitzt eine mechanisch schwingfähigen Einheit und eine elektromechanische Wandlereinheit, welche mindestens ein piezoelektrisches Wandlerelement oder induktives Wandlerelement aufweist, welche die schwingfähige Einheit mittels eines Anregungssignals zu mechanischen Schwingungen anregt, und welche von der schwingfähigen Einheit Schwingungen empfängt und in ein elektrisches Empfangssignal umwandelt, wobei das Empfangssignal eine Überlagerung aus einem die Schwingungen wiedergebenden Nutzsignal und einem Störsignal darstellt. Weiterhin weist die Vorrichtung ein Referenzelement mit einem ersten Bauelement mit elektrisch einstellbarer Größe auf, wobei das Referenzelement parallel zu der elektromechanischen Wandlereinheit geschaltet und mit dem gleichen Anregungssignal beaufschlagt ist, und ein von den Schwingungen der schwingfähigen Einheit unbeeinflusstes Referenzsignal erzeugt. Weiterhin verfügt die Vorrichtung über eine Elektronikeinheit, welche bei einer Beaufschlagung der elektromechanischen Wandlereinheit und des Referenzelements mit dem Anregungssignal aus dem Empfangssignal und dem Referenzsignal das Nutzsignal extrahiert und an Hand des Nutzsignals die Prozessgröße bestimmt und/oder überwacht. Erfindungsgemäß weist die elektromechanische Wandlereinheit ein zweites Bauelement mit elektrisch einstellbarer Größe auf. Das der Wandlereinheit zugeordnete zweite Bauelement mit elektrisch einstellbarer Größe ist vorzugsweise baugleich zu dem ersten Bauelement mit elektrisch einstellbarer Größe des Referenzelements.

In einer Ausgestaltung ist das zweite Bauelement elektrisch in Reihe zu dem piezoelektrischen oder induktiven Wandlerelement geschaltet. Hierdurch ergibt sich ein zu dem Referenzzweig mit dem Referenzelement symmetrischer Messzweig.

In einer Ausgestaltung handelt es sich bei dem ersten Bauelement und dem zweiten Bauelement um einen einstellbaren Widerstand, insbesondere ein Digitalpotentiometer.

Gemäß einer Ausgestaltung ist die Größe des zweiten Bauelements derart einstellbar, dass die elektromechanische Wandlereinheit eine vorgebbare Zeitkonstante aufweist. Die Zeitkonstante der Wandlereinheit ist für den Fall, dass es sich bei dem zweiten Bauelement um einen einstellbaren Widerstand und bei dem Wandlerelement um ein piezoelektrisches Element handelt, durch die Kapazität des piezoelektrischen Wandlerelements und den Widerstandswert vorgegeben. Entsprechend ist die Zeitkonstante bei einem induktiven Wandlerelement durch den Widerstandswert und die Induktivität des induktiven Wandlerelements bestimmt.

Gemäß einer Ausgestaltung, in welcher die Wandlereinheit mindestens ein piezoelektrisches Wandlerelement aufweist, weist das Referenzelement mindestens einen Kondensator oder mindestens ein piezoelektrisches Element auf. Gemäß einer Ausgestaltung, in welcher die Wandlereinheit mindestens ein induktives Wandlerelement aufweist, weist das Referenzelement mindestens eine Spule auf. Das Referenzelement ist entweder gleich der elektromechanischen Wandlereinheit im Messzweig ausgestaltet oder es stellt eine elektrische Ersatzschaltung der Wandlereinheit dar. Im einfachsten Fall besteht das Referenzelement daher aus einem Kondensator und einem Widerstand, bzw. aus einer Spule und einem Widerstand, wobei die Größe des Widerstands hier elektrisch einstellbar ist.

In einer Ausgestaltung weist die Elektronikeinheit eine Regeleinrichtung auf, welche die Größe des ersten Bauelements auf den Wert regelt, bei dem ein Betrag eines Störsignals in dem aus dem Empfangssignal und dem Referenzsignal extrahierten Nutzsignal minimal ist. Minimal bedeutet hier vorzugsweise Null. Mit anderen Worten regelt die Regeleinrichtung die Größe des ersten Bauelements derart, dass sich das Empfangssignal und das Referenzsignal nur durch das Nutzsignal unterscheiden. Nur bei einer nicht optimalen Einstellung des ersten Bauelements ist dem Nutzsignal das auf unterschiedliche Zeitkonstanten der Wandlereinheit und des Referenzelements zurückgehende Störsignal überlagert.

Eine Ausgestaltung sieht vor, dass die Elektronikeinheit die Temperatur des piezoelektrischen oder induktiven Wandlerelements bestimmt.

Gemäß einer Ausgestaltung weist die Elektronikeinheit eine Speichereinheit auf, in welcher eine Kennlinie abgespeichert ist, welche eine Abhängigkeit des geregelten Wertes der Größe des ersten Bauelements von der Temperatur des Wandlerelements wiedergibt, sodass die Temperatur an Hand des geregelten Wertes und der Kennlinie bestimmbar ist.

Eine Ausgestaltung sieht vor, dass das Referenzelement und die elektromechanische Wandlereinheit eine gleiche Anzahl an piezoelektrischen Elementen oder Spulen umfassen, dass ein Temperatursensor vorgesehen ist, welcher die Temperatur am Ort des Referenzelements bestimmt, dass die Elektronikeinheit an Hand des in dem Nutzsignal enthaltenen Störsignals die Temperaturdifferenz zwischen dem Wandlerelement und dem Referenzelement bestimmt, und dass die Elektronikeinheit an Hand der Temperatur am Ort des Referenzelements und der Temperaturdifferenz die Temperatur des Wandlerelements bestimmt. Vorzugsweise bestimmt die Elektronikeinheit hierbei die Temperaturdifferenz aus dem zur Anpassung der Zeitkonstanten geregelten Wert des ersten Bauelements.

Eine weitere Ausgestaltung der Vorrichtung beinhaltet, dass die Vorrichtung ein Über- oder Unterschreiten eines vorgegebenen Grenzwertes der Prozessgröße überwacht, dass in der Elektronikeinheit der Vorrichtung für einen vorgegebenen Temperaturbereich, in welchem die Vorrichtung einsetzbar ist, Schwellwerte für die von der Prozessgröße abhängige Schwingungseigenschaft abgelegt sind, die die Schwingungseigenschaft beim Erreichen des Grenzwertes bei der jeweiligen Temperatur aufweist, und dass die Elektronikeinheit das Überoder Unterschreiten des vorgegebenen Grenzwertes an Hand der im Temperaturmessbetrieb ermittelten Temperatur und dem dieser Temperatur zugeordneten Schwellwert überwacht.

In einer Ausgestaltung beaufschlagt die Elektronikeinheit die elektromechanische Wandlereinheit und das Referenzelement in einem Temperaturmessbetrieb mit einem Hilfssignal, welches eine Frequenz aufweist, die außerhalb eines Resonanzbereichs um die Resonanzfrequenz der schwingfähigen Einheit liegt, und bestimmt zumindest aus dem bei Beaufschlagung mit dem Hilfssignal aus dem Empfangssignal und dem Referenzsignal extrahierten Nutzsignal die Temperatur des Wandlerelements. In dieser Ausgestaltung wird zwischen Messbetrieb und Temperaturmessbetrieb unterschieden. Während des Messbetriebs erfolgt die Beaufschlagung von Wandlereinheit und Referenzelement mit dem Anregungssignal, sodass die schwingfähige Einheit Schwingungen in ihrer Eigen- oder Resonanzfrequenz durchführt. Während des Temperaturmessbetriebs erfolgt die Anregung mit einem Hilfssignal, dessen Frequenz oder Frequenzen oberhalb des Resonanzbereichs liegen. Messbetrieb und Temperaturmessbetrieb verlaufen entweder gleichzeitig, wobei das Hilfssignal Teil des Anregungssignals ist, oder in unterschiedlichen Zeitabschnitten, wobei die Elektronikeinheit die elektromechanische Wandlereinheit und das Referenzelement abwechselnd mit dem Anregungssignal und mit dem Hilfssignal beaufschlagt. Beispielsweise ist im Fall eines Rechtecksignals das Hilfssignal in Form von höherfrequenten Schwingungsanteilen automatisch Teil des Anregungssignals.

Die Erfindung wird anhand der nachfolgenden Figuren näher erläutert.
- Fig. 1: zeigt eine Vorrichtung zur Überwachung eines Füllstands in einem Behälter;
- Fig. 2: zeigt einen Schaltplan einer ersten Ausgestaltung einer Vorrichtung nach Fig. 1 mit einem piezoelektrischen Wandlerelement;
- Fig. 3: zeigt einen Schaltplan einer zweiten Ausgestaltung einer Vorrichtung nach Fig. 1 mit zwei piezoelektrischen Wandlerelementen;
- Fig. 4: zeigt einen Schaltplan einer dritten Ausgestaltung einer Vorrichtung nach Fig. 1 mit einem induktiven Wandlerelement.

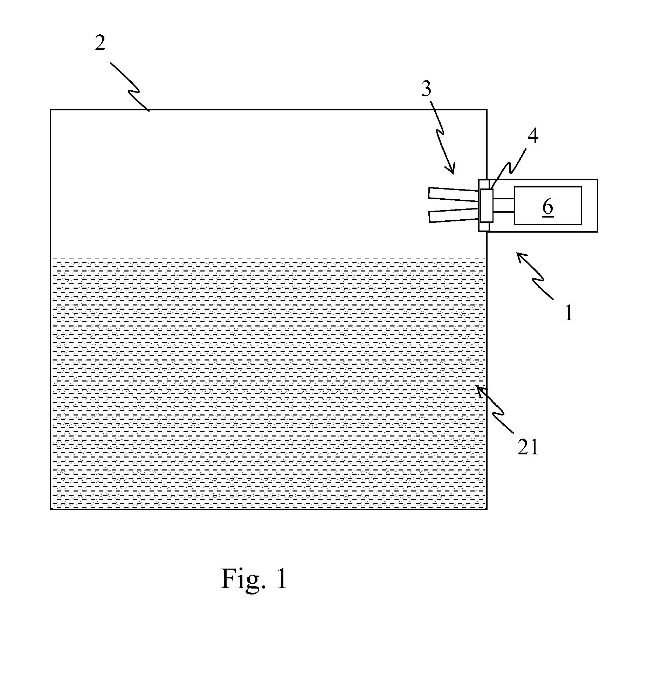

In Fig. 1 ist eine Vorrichtung 1 zur Bestimmung und/oder Überwachung eines vorbestimmten Füllstands, der Dichte oder der Viskosität eines Mediums 21 in einem Behälter 2 dargestellt. Die schwingfähige Einheit 3 wird von zwei Schwingstäben gebildet, welche über eine Membran miteinander gekoppelt und über diese zu mechanischen Schwingungen anregbar sind. Die Vorrichtung 1 ist derart in den Behälter 2 eingebracht, dass sich die schwingfähige Einheit 3 auf einer Höhe befindet, welche dem zu überwachenden Füllstand entspricht. Auf der dem Medium 21 abgewandten Rückseite der Membran ist eine elektromechanische Wandlereinheit 4, angeordnet, welche die schwingfähige Einheit 3 zu Schwingungen anregt und mechanische Schwingungen von dieser empfängt und in ein elektrisches Empfangssignal umwandelt.

Aus dem Stand der Technik sind verschiedenartige Ausgestaltungen einer elektromechanischen Wandlereinheit 4 mit einem oder mehreren piezoelektrischen Wandlerelementen 41, 43, 44 bekannt. In der Ein-Piezo-Technologie, bei welcher das Wandlerelement gleichermaßen als Sender und Empfänger dient, finden vor allem eine Ausgestaltung mit einem scheibenförmigen zentral auf der kreisförmigen Membran angeordneten Wandlerelement 41 und eine Ausgestaltung mit zwei kreisabschnittförmigen Wandlerelementen 43, 44, welche jeweils auf einer Membranhälfte symmetrisch zueinander angeordnet sind, Anwendung. Beide Ausgestaltungen ermöglichen eine gegensinnige Schwingung der beiden Schwingstäbe um ihre Längsachse.

Eine Alternative stellen induktive Wandlerelemente in Form von Spulen dar. Meist sind eine Sendespule und eine separate Empfangsspule vorhanden. Werden Störsignale im Empfangssignal kompensiert, kann auch hier eine Spule sowohl als Sender als auch als Empfänger dienen. Die beiden Schwingstäbe der schwingfähigen Einheit 3 weisen beispielsweise in Richtung Gehäuseinneres jeweils einen stabförmigen Fortsatz aus einem magnetischen Material auf, welcher in das Magnetfeld des induktiven Wandlerelements 46 hineinreicht. Durch Anlegen einer Wechselspannung an das induktive Wandlerelement 46 sind die Schwingstäbe zu gegenphasigen Biegeschwingungen anregbar.

Die Anregung zu mechanischen Schwingungen erfolgt beispielsweise mittels eines elektrischen Schwingkreises, wobei das Empfangssignal zumindest über einen Phasenschieber und einen Verstärker als Anregungssignal auf die Wandlereinheit 4 rückgekoppelt wird. Über den Phasenschieber ist eine feste Phasenverschiebung zwischen Anregungssignal und Empfangssignal vorgebbar, sodass beispielsweise zur Füllstandsmessung ein Wert für die Phasenverschiebung einstellbar ist, bei welcher die Resonanzbedingung erfüllt ist.

Alternativ erfolgt die Anregung über einen so genannten Frequenzsweep, wobei das Anregungssignal kontinuierlich ein vorgegebenes Frequenzband in diskreten Schritten durchläuft und hierbei auch die Resonanzfrequenz überstreicht.

Zur Füllstandsüberwachung regt die elektromechanische Wandlereinheit 4 die schwingfähige Einheit 3 zu resonanten Schwingungen an. In der Elektronikeinheit befindet sich mindestens eine Regel-/Auswerteeinheit 6, beispielsweise in Form eines Mikrocontrollers oder eines FPGAs (Field Programmable Gate Array). Die Regel-/Auswerteeinheit 6 wertet das elektrische Empfangssignal in Bezug auf den Füllstand aus, indem sie die Schwingfrequenz mit einer vorgegebenen Grenzfrequenz vergleicht. Liegt die Schwingfrequenz unterhalb der Grenzfrequenz, ist die schwingfähige Einheit 3 mit Medium 21 bedeckt; liegt sie darüber, schwingt die schwingfähige Einheit 3 frei.

Zur Bestimmung und/oder Überwachung der Dichte oder Viskosität des Mediums 21 wertet die Regel-/Auswerteeinheit 6 bei eingetauchter schwingfähiger Einheit 3 die Schwingfrequenz, die Amplitude und/oder die Phasenverschiebung zwischen Anregungssignal und Empfangssignal aus. Die Formeln zur Ermittlung der Prozessgrößen aus den Schwingungseigenschaften sind in einer Speichereinheit 62 in der Regel-/Auswerteeinheit 6 hinterlegt.

Die Erfindung wird am Beispiel der Schwinggabel erläutert, ist jedoch ebenso bei Messgeräten mit einer schwingfähigen Einheit 3 in Form eines Schwingstabes oder einer Membran einsetzbar.

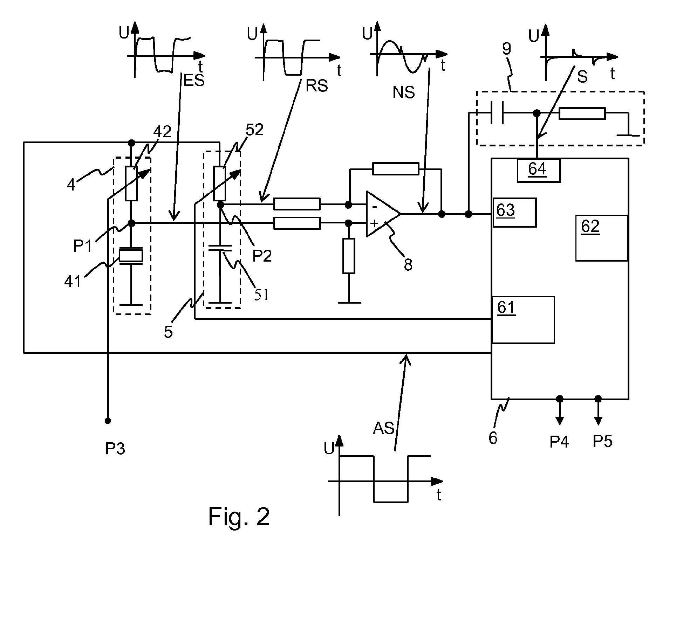

In Fig. 2 ist die Erfindung an Hand eines Schaltbildes einer ersten Variante der Vorrichtung 1 dargestellt. Die dargestellte Elektronikeinheit umfasst sowohl analoge als auch digitale Komponenten.

Ein Signalgenerator erzeugt ein Anregungssignal AS und führt es einem Messzweig und einem Referenzzweig zu.

In dem Messzweig ist eine ein piezoelektrisches Wandlerelement 41 aufweisende elektromechanische Wandlereinheit 4 angeordnet, welche die schwingfähige Einheit 3 mittels des Anregungssignals AS zu Schwingungen anregt. Das piezoelektrische Wandlerelement 41 ist von zwei Elektroden eingefasst, wobei eine der Elektroden mit Masse verbunden ist und die andere Elektrode über einen elektrischen Widerstand elektrisch einstellbarer Größe mit dem Anregungssignal AS beaufschlagt ist. Der einstellbare Widerstand ist durch ein zweites Digitalpotentiometer 42 realisiert. Wandlerelement 41 und zweites Digitalpotentiometer 42 bilden ein RC-Glied, dessen Zeitkonstante durch das Produkt aus dem elektrischen Widerstand des Digitalpotentiometers 42 und der Kapazität des Wandlerelements 41 gegeben ist.

Bei dem Anregungssignal AS handelt es sich um eine elektrische Wechselspannung, beispielsweise in Form eines Rechtecksignals. Bei der Beaufschlagung mit dem Anregungssignal AS führt das piezoelektrische Wandlerelement 41 der Wandlereinheit 4 periodische Dickenoszillationen aus, welche mit entsprechenden Oszillationen des Durchmessers einhergehen. Das Wandlerelement 41 ist derart auf der Membran der schwingfähigen Einheit 3 befestigt, dass die Membran den Oszillationen folgt und sich wölbt. In Folge der Bewegung der Membran führen die Schwingstäbe gegenphasige Schwingungen durch. Die Schwingungsparameter hängen hierbei von der Prozessgröße ab. Die mechanischen Schwingungen werden von dem Wandlerelement 41 in ein elektrisches Empfangssignal ES umgewandelt, welches eine Überlagerung aus einem Nutzsignal NS und einem Störsignal darstellt, wobei das Störsignal auf Umladeströme in dem piezoelektrischen Wandlerelement 41 auf Grund des Polaritätswechsels des Anregungssignals AS zurückzuführen ist. Das Nutzsignal NS resultiert aus durch die mechanischen Schwingungen des piezoelektrischen Wandlerelements 41 hervorgerufenen Ladeströmen. Der Abgriff P1 des Empfangssignals ES befindet sich zwischen dem Wandlerelement 41 und dem zweiten Digitalpotentiometer 42.

In einem parallel zu dem Messzweig mit dem Anregungssignal AS beaufschlagten Referenzzweig befindet sich ein Referenzelement 5 in Form einer Reihenschaltung aus einem Kondensator 51 und einem ersten Digitalpotentiometer 52. Das Referenzelement 5 bildet das elektrische Verhalten der Wandlereinheit 4 bei Beaufschlagung mit dem Anregungssignal AS im Nutzfrequenzbereich nach. Das hier dargestellte Referenzelement 5 stellt die einfachste Form einer elektrischen Ersatzschaltung für die Wandlereinheit 4 dar. In einer alternativen Ausgestaltung weist das Referenzelement 5 zur Nachbildung der Wandlereinheit 4 weitere elektrische Bauteile auf, beispielsweise einen oder mehrere elektrische Widerstände und/oder Spulen.

Zwischen dem ersten Digitalpotentiometer 52 und dem Kondensator 51 befindet sich der Abgriff P2 für das Referenzsignal RS. Das Referenzsignal RS wird nur von den Kenngrößen des Referenzelements 5 beeinflusst und ist unabhängig von den Schwingungen der schwingfähigen Einheit 3. Das Referenzsignal RS enthält nur das Störsignal, welches aus von dem Anregungssignal AS hervorgerufenen Ladeströmen resultiert. Das Störsignal folgt abschnittsweise einer aufsteigenden und einer abfallenden Exponentialfunktion mit einer durch die Parameter des Referenzzweigs vorgegebenen Zeitkonstante. Gleiches gilt entsprechend für das Störsignal im Empfangssignal ES. Sind die Zeitkonstanten des Referenzzweigs und des Messzweigs gleich, so gilt dies auch für die Störsignale.

Das zweite Digitalpotentiometer 42 im Messzweig ist derart eingestellt, dass das aus zweitem Digitalpotentiometer 42 und Wandlerelement 41 gebildete RC-Glied bei einer bekannten Referenztemperatur eine vorgegebene Zeitkonstante aufweist. Die Kapazität des Kondensators 51 und der Widerstand des ersten Digitalpotentiometers 52 sind derart gewählt bzw. eingestellt, dass das Referenzelement 5 bei der Referenztemperatur die gleiche Zeitkonstante wie das RC-Glied im Messzweig besitzt. Die Störsignale im Empfangssignal ES und im Referenzsignal RS kompensieren sich somit und das Referenzsignal RS und das Empfangssignal ES unterscheiden sich nur durch das schwingungsabhängige Nutzsignal NS.

Um das Nutzsignal NS zu extrahieren sind das Empfangssignal ES und das Referenzsignal RS einem Differenzverstärker 8 zugeführt. Das Referenzsignal RS liegt hierbei am invertierenden Eingang an. Das Ausgangssignal des Differenzverstärkers bildet das Nutzsignal NS. Das Nutzsignal NS ist über einen Rückkopplungswiderstand auf den invertierenden Eingang des Differenzverstärkers 8 rückgekoppelt. An Stelle des Differenzverstärkers 8 ist auch ein Addierer einsetzbar, welchem das Empfangssignal ES und ein invertiertes Referenzsignal RS zugeführt sind.

Das erste Digitalpotentiometer 52 erzeugt Überschwinger in den Umladeströmen. Deren Kompensation durch die nachfolgende Signalverarbeitung wäre sehr aufwendig. Gemäß der vorliegenden Erfindung ist an Stelle eines unveränderlichen ohmschen Widerstands ein baugleiches Digitalpotentiometer 42 in den Messzweig eingebracht. Dieses erzeugt die gleichen Überschwinger wie das erste Digitalpotentiometer 52, sodass sich die Überschwinger bei der Differenzbildung zur Erzeugung des Nutzsignals NS kompensieren.

Ein weiterer Vorteil, der sich fertigungsseitig durch den Einsatz des zweiten Digitalpotentiometers 42 ergibt, liegt darin, dass der Wert für die Zeitkonstante des RC-Glieds im Messzweig trotz Schwankungen der Kapazitätswerte baugleicher Wandlerelemente 41 auf einen vorgegebenen Wert festsetzbar ist. Das Referenzelement 5 muss dann nicht für jede einzelne ansonsten baugleiche Vorrichtung an eine jeweilige Zeitkonstante angepasst werden. Die optimale Einstellung des ersten Digitalpotentiometers 52 ist nur einmalig festzustellen und kann dann für jede Elektronikeinheit übernommen werden. Unter einer optimalen Einstellung ist hierbei zu verstehen, dass zur Anpassung der Zeitkonstanten des Referenzelements 5 an die Wandlereinheit 4 über den gesamten Temperaturbereich auch der gesamte zur Verfügung stehende Wertebereich des ersten Digitalpotentiometers 52, z.B. 0-50 kOhm, verwendet wird. Die Einstellung des zweiten Digitalpotentiometers 42 erfolgt elektronisch über den Steuerport P3.

Das Nutzsignal NS ist einem Analog-Digital-Wandler 63 in der Regel-/Auswerteeinheit 6 zugeführt, welche das Nutzsignal NS im Messbetrieb in Bezug auf die Prozessgröße auswertet. Der Wert der Prozessgröße ist am Port P4 angreifbar. In einer Variante, bei welcher die Anregung der schwingfähigen Einheit 3 über einen Schwingkreis erfolgt, ist das Nutzsignal NS über einen Verstärker und einen Phasenschieber der Wandlereinheit 4 und dem Referenzelement 5 als Anregungssignal AS zugeführt. Der Phasenschieber ist derart eingestellt, dass die Resonanzbedingung im Schwingkreis erfüllt ist. In einer anderen Variante, insbesondere bei der digitalen Anregung mittels eines Frequenzsweeps, erzeugt die Regel-/Auswerteeinheit 6 das Anregungssignal AS.

Bei der Referenztemperatur unterscheiden sich der schwingungsunabhängige Anteil des Empfangssignals ES und das Referenzsignal RS nicht. Die Kapazität des Wandlerelements 41 ist jedoch temperaturabhängig. Diese Abhängigkeit bewirkt eine temperaturabhängige Zeitkonstante des aus Wandlerelement 41 und zweitem Digitalpotentiometer 42 gebildeten RC-Glieds. Durch die veränderte Zeitkonstante verändert sich die Ladekurve des dem Nutzsignal NS überlagerten Störsignals. Der Kondensator 51 im Referenzzweig hingegen ist temperaturstabil. Durch die temperaturunabhängige Kapazität des Kondensators 51 zeigt das Referenzsignal RS folglich keine derartige Temperaturabhängigkeit und die Störsignale in Empfangssignal ES und Referenzsignal RS kompensieren sich bei einer Temperaturänderung nicht mehr. Das Nutzsignal NS weist dann ein Störsignal S als Signalanteil auf, welches zu kompensieren ist.

Die Kompensation des Störsignals S erfolgt mittels des ersten Digitalpotentiometers 52. Die Zeitkonstante des Referenzelements 5 ist durch das erste Digitalpotentiometer 52 derart aktiv regelbar, dass die Zeitkonstante des Referenzelements 5 permanent an diejenige der Wandlereinheit 4 angepasst ist. Die Prozessgröße ist somit auch bei Temperaturänderungen mit hoher Genauigkeit bestimmbar. Zur Regelung der Einstellung des ersten Digitalpotentiometers 52 regelt eine Regeleinrichtung 61 den Wert des ersten Digitalpotentiometers 52 beispielsweise derart, dass das im Nutzsignals NS enthaltene Störsignal S eine minimale Amplitude aufweist. Vorzugsweise verschwindet die Amplitude, d.h. das Nutzsignal NS enthält kein Störsignal S mehr. In diesem Zustand sind die Zeitkonstanten von Messzweig und Referenzzweig gleich und das Störsignal im Empfangssignal ES ist vollständig kompensiert.

Zur Bestimmung der Amplitude des Störsignals S ist das Nutzsignal NS einem Hochpass 9 zugeführt, welcher das Störsignal S aus dem Nutzsignal NS herausfiltert. Der Hochpass 9 ist vorzugsweise adaptiv aufgebaut und vorzugsweise als Notch-Filter realisiert. Das Störsignal S ist über einen Analog-Digital-Wandler 64 der Regel-/Auswerteeinheit 6 zugeführt. Vorzugsweise tastet die Regel-/Auswerteeinheit 6 das Störsignal S zu vorgegebenen Zeitpunkten ab. Die vorgegebenen Zeitpunkte sind relativ zu dem Anregungssignal AS definiert und entsprechen den Zeitpunkten, zu welchen das Anregungssignal AS einen Nulldurchgang aufweist. Die abgetasteten Werte entsprechen der Amplitude des Störsignals S.

Auf Grund der Temperaturabhängigkeit der Amplitude des im Nutzsignal NS enthaltenen Störsignals S kann das Störsignal S weiterhin auch zur Bestimmung der Temperatur des Wandlerelements 41 genutzt werden.

In einer Ausgestaltung bestimmt die Regel-/Auswerteeinheit 6 direkt aus der Amplitude des Störsignals S die Temperatur am Ort des Wandlerelements 41, beispielsweise an Hand einer in der Speichereinheit 62 hinterlegten Kennlinie.

In einer anderen Ausgestaltung bestimmt die Regel-/Auswerteeinheit 6 die Temperatur indirekt an Hand der Regelung des ersten Digitalpotentiometers 52. Bei minimaler Amplitude des Störsignals S stimmen die Zeitkonstanten der RC-Glieder im Messzweig und im Referenzzweig im Wesentlichen überein. Verschwindet das Störsignal S vollständig, besitzen die elektromechanische Wandlereinheit 4 und das Referenzelement 5 die gleiche Zeitkonstante. Die Regel-/Auswerteeinheit 6 bestimmt die Temperatur beispielsweise aus dem nach der Regelung eingestellten Wert des elektrischen Widerstands des ersten Digitalpotentiometers 52. Aus dem eingestellten Widerstandswert ist die Zeitkonstante der beiden RC-Glieder und hieraus die Kapazität des Wandlerelements 41 bestimmbar. Zwischen der Kapazität und der Temperatur am Ort des Wandlerelements 41 besteht ein eindeutiger Zusammenhang. Dieser ist in Form einer Formel oder einer Kennlinie in der Speichereinheit 62 in der Regel-/Auswerteeinheit 6 hinterlegt. Der Temperaturmesswert ist über den Port P5 abgreifbar. Die Temperaturinformation wird vorteilhaft von der Regel-/Auswerteeinheit 6 selbst bei der Bestimmung oder Überwachung der Prozessgröße genutzt. Da die Schwingungseigenschaften der schwingfähigen Einheit 3 eine Temperaturabhängigkeit aufweisen können, sind in der Speichereinheit 62 vorzugsweise Kennlinien hinterlegt, welche eine Abhängigkeit der Schwingungseigenschaften von der Temperatur aufzeigen und bei der Bestimmung der Prozessgröße berücksichtigt werden. Beispielsweise ist zur Füllstandsüberwachung für jeden Temperaturwert eine zugehörige Grenzfrequenz hinterlegt. Die Regel-/Auswerteeinheit 6 wählt in Abhängigkeit der gemessenen Temperatur am Ort des Wandlerelements 41 die entsprechende Grenzfrequenz aus, mit welcher sie die gemessene Schwingfrequenz vergleicht, um eine Aussage über ein Über- oder Unterschreiten des Grenzfüllstands zu treffen.

Alternativ zur simultanen Messung der Prozessgröße und der Temperatur findet die Temperaturmessung in einem Temperaturmessbetrieb statt. In einem Temperaturmessbetrieb beaufschlagt der Signalgenerator die Wandlereinheit 4 und das Referenzelement 5 mit einem Hilfssignal HS. Die Frequenz des Hilfssignals HS liegt außerhalb eines Resonanzbereichs um die Resonanzfrequenz der schwingfähigen Einheit 3. Bei Beaufschlagung von Wandlereinheit 4 und Referenzelement 5 nur mit dem Hilfssignal HS weist das Empfangssignal ES keine schwingungsabhängigen Anteile auf. Entspricht die Temperatur am Ort des Wandlerelements 41 der Referenztemperatur sind Referenzsignal RS und Empfangssignal ES identisch und das schwingungsbedingte Nutzsignal NS verschwindet. Bei einer veränderten Temperatur sind das Referenzelement 5 und die Wandlereinheit 4 nicht mehr abgeglichen und es entsteht ein zu dem Störsignal S identisches Nutzsignal NS. Die Amplitude des Nutzsignals NS bei der Anregung mit dem Hilfssignal HS ist ein direktes Maß für die Kapazität des Wandlerelements 41 und somit auch für die Temperatur am Ort des Wandlerelements 41.

Wird der Messbetrieb für den Temperaturmessbetrieb periodisch unterbrochen, liegt an der Wandlereinheit 4 und dem Referenzelement 5 ein Signal mit einer periodisch kontinuierlich veränderlichen Frequenz an, dessen Perioden jeweils einen ersten und einen zweiten zeitlich vorausgehenden oder nachfolgenden Zeitbereich umfassen. In dem ersten Zeitbereich bildet das Signal das Anregungssignal AS. Hierbei steigt die Frequenz des Signals kontinuierlich an oder fällt die Frequenz kontinuierlich ab, falls die Anregung mittels eines Frequenzsweeps erfolgt, oder die Frequenz entspricht der Resonanzfrequenz der schwingfähigen Einheit 3. In dem zweiten Zeitbereich bildet das Signal das Hilfssignal HS. Hierbei ist die Frequenz des Signals konstant und liegt außerhalb des durch die Resonanzfrequenz der schwingfähigen Einheit 3 vorgegebenen Frequenzbereichs. Anregungssignal AS und Hilfssignal HS sind beispielsweise sinusförmige, trapezförmige, dreieckförmige oder rechteckförmige Signale. Ein Hochpassfilter ist in dieser Ausgestaltung nicht erforderlich, da das Nutzsignal NS während des Temperaturmessbetriebs dem Störsignal S entspricht. Die Regeleinrichtung 61 regelt in dieser Variante die Einstellung des Widerstands des ersten Digitalpotentiometers 52 derart, dass der Betrag der Amplitude des Nutzsignals NS im Temperaturmessbetrieb minimal ist. Weitere Details zur Temperaturbestimmung mittels eines Hilfssignals HS sind der deutschen Patentanmeldung mit dem Aktenzeichen 102010030791.2 zu entnehmen.

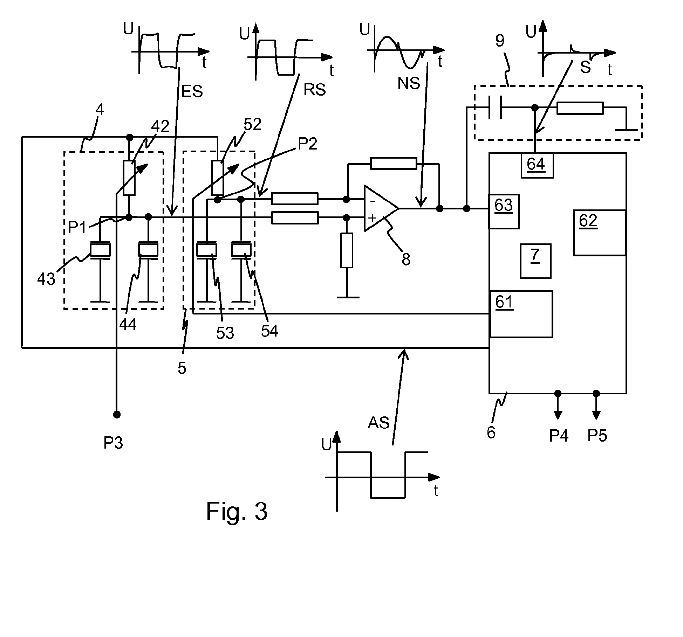

Fig. 3 zeigt das Schaltbild einer zweiten Variante der Vorrichtung 1. An Stelle der Reihenschaltung aus erstem Digitalpotentiometer 52 und Kondensator 51 besteht das Referenzelement 5 hier aus einem Digitalpotentiometer 52 und zwei piezoelektrischen Wandlerelementen 53, 54 im Folgenden Kompensations-Piezos genannt. Da im Messzweig zwei Wandlerelemente 43, 44 angeordnet sind, weist das Referenzelement 5 entsprechend ebenfalls zwei Kompensations-Piezos 53, 54 auf. Die Kompensations-Piezos 53, 54 sind baugleich zu den Wandlerelementen 43, 44 im Messzweig. Durch die Kompensations-Piezos 53, 54 sind mit Messzweig und Referenzzweig zwei identische Zweige gebildet, welche bei der Referenztemperatur die gleiche Zeitkonstante besitzen und das gleiche Temperatur- und Alterungsverhalten aufweisen. Die Kompensations-Piezos 53, 54 sind im Gegensatz zu den Wandlerelementen 43, 44 unabhängig von den Schwingungen der schwingfähigen Einheit 3. In Mess- und Referenzzweig treten die gleichen parasitären Effekte auf, sodass sich diese Effekte bei der Erzeugung des Nutzsignals NS mittels des Differenzverstärkers 8 idealerweise vollständig kompensieren.

Kompensations-Piezos 53, 54 und Wandlerelemente 43, 44 entstammen vorzugsweise derselben Charge. Innerhalb einer Charge ist das Temperatur- und Alterungsverhalten dieser Elemente identisch. Die Grundkapazität der Kompensations-Piezos 53, 54 und der Wandlerelemente 43, 44 kann sich unterscheiden, die prozentuale Änderung der Kapazität bei einer Temperaturänderung unterscheidet sich jedoch nicht.

Die Kapazität der Kompensations-Piezos 53, 54 unterliegt, wie die der Wandlerelemente 43, 44 auch, Temperatureinflüssen. In Folge dessen ist in dieser Ausgestaltung nur die Temperaturdifferenz zwischen Referenzelement 5 und Wandlerelementen 43, 44 mittels des im Nutzsignal NS enthaltenen Störsignals S messbar. Um ausgehend von der messbaren Temperaturdifferenz eine Aussage über die am Ort der Wandlerelemente 43, 44 herrschende Temperatur treffen zu können, muss die Temperatur am Ort des Referenzelements 5 bekannt sein. Hierzu ist ein Temperatursensor 7 benachbart zu dem Referenzelement 5 in der Elektronikeinheit angeordnet. Beispielsweise ist der Temperatursensor 7 in die Regel-/Auswerteeinheit 6 integriert. Die Regel-/Auswerteeinheit 6 ist vorzugsweise zumindest teilweise als Mikrocontroller ausgestaltet. Oftmals ist ein Mikrocontroller bereits mit einem Temperatursensor 7 ausgestattet, sodass die Temperatur in diesem Fall bereits bekannt ist und kein separater Temperatursensor erforderlich ist.

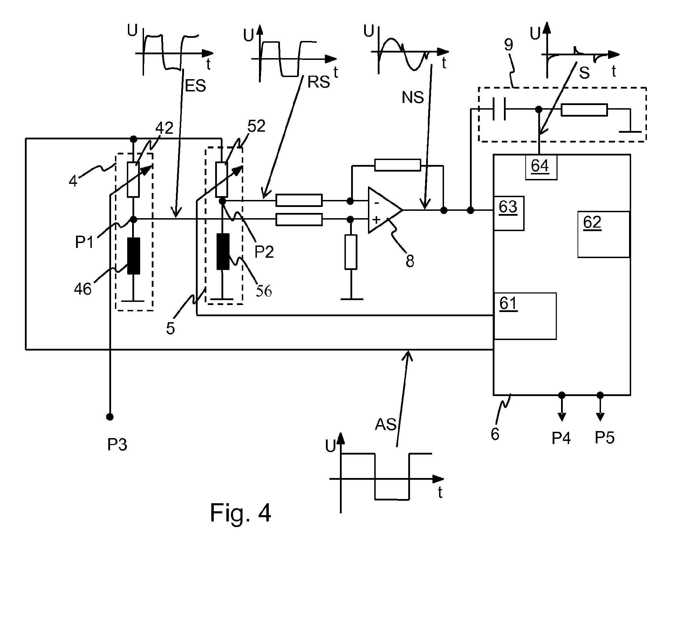

In Fig. 4 ist ein Schaltplan einer Variante der Vorrichtung mit einem induktiven Wandlerelement 46 an Stelle eines piezoelektrischen Wandlerelements 41 bei digitaler Anregung dargestellt. Die Regel-/Auswerteeinheit 6 erzeugt das Anregungssignal AS, vorzugsweise in Form eines Rechtecksignals, und führt es dem Messzweig und dem Referenzzweig zu. In dem Messzweig ist das induktive Wandlerelement 46 angeordnet, während in den Referenzzweig das Referenzelement 5 mit der Spule 56 eingebracht ist. Das Anregungssignal ist der Spule 56 über den elektrisch einstellbaren Widerstand in Form des ersten Digitalpotentiometers 52 und dem induktiven Wandlerelement 46 über das zweite Digitalpotentiometer 42 zugeführt. Das Empfangssignal ES der Wandlereinheit 4 und das Referenzsignal RS des Referenzelements 5 sind dem Differenzverstärker 8 zugeführt, welcher zur Erzeugung des Nutzsignals NS das Differenzsignal bildet. Aus dem Nutzsignal NS bestimmt die Regel-/Auswerteeinheit 6 die Prozessgröße.

Analog zu den vorherigen Ausgestaltungen ist die Zeitkonstante des RL-Glieds im Messzweig über den Wert des zweiten Digitalpotentiometers 42 auf eine vorgegebene Größe einstellbar. Das erste Digitalpotentiometer 52 ist während des Betriebs des Messgerätes 1 derart regelbar, dass das RL-Glied im Referenzzweig stets die gleiche Zeitkonstante wie das entsprechend Glied im Messzweig aufweist. Störsignale S im Nutzsignal NS auf Grund von unterschiedlichen Zeitkonstanten werden hierdurch kompensiert. Auch in dieser Variante filtert die Regel-/Auswerteeinheit 6 die bei unvollständiger Kompensation im Nutzsignal NS enthaltenen Störsignale S aus dem Nutzsignal NS heraus, regelt den Wert des ersten Digitalpotentiometers 52 derart, dass eine Amplitude der Störsignale S minimal ist, und bestimmt vorzugsweise weiterhin die Temperatur des induktiven Wandlerelements 46 an Hand der Einstellung des ersten Digitalpotentiometers 52.

In einer Ausgestaltung besteht das Referenzelement 5 zur verbesserten Anpassung des Übertragungsverhaltens des Referenzelements 5 an das Übertragungsverhalten der Wandlereinheit 4 mit dem induktiven Wandlerelement 46 nicht nur aus dem ersten Digitalpotentiometer 52 und der Spule 56, sondern enthält weitere Bauteile. Beispielsweise besteht das Referenzelement 5 aus einem ersten einstellbaren Digitalpotentiometer 52, einer Spule 56, einem Kondensator und einem elektrischen Widerstand fest vorgegebener Größe.

### Bezugszeichenliste

- 1: Messgerät
- 2: Behälter
- 21: Medium
- 3: Schwingfähige Einheit
- 4: Wandlereinheit
- 41: Piezoelektrisches Wandlerelement
- 42: Zweites Digitalpotentiometer
- 43: Erstes Wandlerelement
- 44: Zweites Wandlerelement
- 46: Induktives Wandlerelement
- 5: Referenzelement
- 51: Kondensator
- 52: Erstes Digitalpotentiometer
- 53: Erster Kompensationspiezo
- 54: Zweiter Kompensationspiezo
- 56: Spule
- 6: Regel-/Auswerteeinheit
- 61: Regeleinrichtung
- 62: Speichereinheit
- 63, 64: Analog-Digital-Wandler
- 7: Temperatursensor
- 8: Differenzverstärker
- 9: Hochpass
- P1: Abgriff ES
- P2: Abgriff RS
- P3: Steuerport
- P4: Ausgang Prozessgröße
- P5: Ausgang Temperatur

## Patentansprüche

1. Vorrichtung (1) zur Bestimmung und/oder Überwachung mindestens einer Prozessgröße eines Mediums (21) in einem Behälter (2), mit
- einer mechanisch schwingfähigen Einheit (3),
- einer elektromechanischen Wandlereinheit (4), welche mindestens ein piezoelektrisches Wandlerelement (41) oder induktives Wandlerelement (46) aufweist, welche die schwingfähige Einheit (3) mittels eines Anregungssignals (AS) zu mechanischen Schwingungen anregt, und welche von der schwingfähigen Einheit (3) Schwingungen empfängt und in ein elektrisches Empfangssignal (ES) umwandelt, wobei das Empfangssignal (ES) eine Überlagerung aus einem die Schwingungen wiedergebenden Nutzsignal (NS) und einem Störsignal darstellt,
- einem Referenzelement (5) mit einem ersten Bauelement (52) mit elektrisch einstellbarer Größe, wobei das Referenzelement (5) parallel zu der elektromechanischen Wandlereinheit (4) geschaltet und mit dem gleichen Anregungssignal (AS) beaufschlagt ist, und ein von den Schwingungen der schwingfähigen Einheit (3) unbeeinflusstes Referenzsignal (RS) erzeugt,
- und einer Elektronikeinheit, welche bei einer Beaufschlagung der elektromechanischen Wandlereinheit (4) und des Referenzelements (5) mit dem Anregungssignal (AS) aus dem Empfangssignal (ES) und dem Referenzsignal (RS) das Nutzsignal (NS) extrahiert und an Hand des Nutzsignals (NS) die Prozessgröße bestimmt und/oder überwacht
**dadurch gekennzeichnet,**
**dass** die elektromechanische Wandlereinheit (4) ein zweites Bauelement (42) mit elektrisch einstellbarer Größe aufweist.

2. Vorrichtung nach Anspruch 1,
**dadurch gekennzeichnet,**
**dass** das zweite Bauelement (42) elektrisch in Reihe zu dem piezoelektrischen Wandlerelement (41) oder induktiven Wandlerelement (46) geschaltet ist.

3. Vorrichtung nach Anspruch 1 oder 2,
**dadurch gekennzeichnet,**
**dass** es sich bei dem ersten Bauelement (52) und dem zweiten Bauelement (42) um einen einstellbaren Widerstand, insbesondere ein Digitalpotentiometer, handelt.

4. Vorrichtung nach einem der vorangehenden Ansprüche,
**dadurch gekennzeichnet,**
**dass** die Größe des zweiten Bauelements (42) derart einstellbar ist, dass die elektromechanische Wandlereinheit (4) eine vorgebbare Zeitkonstante aufweist.

5. Vorrichtung nach einem der vorangehenden Ansprüche,
**dadurch gekennzeichnet,**
**dass** das Referenzelement (5) für den Fall, dass die Wandlereinheit (4) mindestens ein piezoelektrisches Wandlerelement (41) aufweist, mindestens einen Kondensator (51) oder mindestens ein piezoelektrisches Element (53, 54) aufweist und dass das Referenzelement (5) für den Fall, dass die Wandlereinheit (4) mindestens ein induktives Wandlerelement (46) aufweist, mindestens eine Spule (56) aufweist.

6. Vorrichtung nach einem der vorangehenden Ansprüche,
**dadurch gekennzeichnet,**
**dass** die Elektronikeinheit eine Regeleinrichtung (61) aufweist, welche die Größe des ersten Bauelements (52) auf den Wert regelt, bei dem ein Betrag eines Störsignals (S) in dem aus dem Empfangssignal (ES) und dem Referenzsignal (RS) extrahierten Nutzsignal (NS) minimal ist.

7. Vorrichtung nach einem der vorangehenden Ansprüche,
**dadurch gekennzeichnet,**
**dass** die Elektronikeinheit die Temperatur des piezoelektrischen oder induktiven Wandlerelements (41, 46) bestimmt.

8. Vorrichtung nach Anspruch 6 und 7,
**dadurch gekennzeichnet,**
**dass** die Elektronikeinheit eine Speichereinheit (62) aufweist, in welcher eine Kennlinie abgespeichert ist, welche eine Abhängigkeit des geregelten Wertes der Größe des ersten Bauelements (52) von der Temperatur des Wandlerelements (41, 46) wiedergibt, sodass die Temperatur an Hand des geregelten Wertes und der Kennlinie bestimmbar ist.

9. Vorrichtung nach einem der vorangehenden Ansprüche,
**dadurch gekennzeichnet,**
**dass** das Referenzelement (5) und die elektromechanische Wandlereinheit (4) eine gleiche Anzahl an piezoelektrischen Elementen (41, 42, 43, 53, 54) oder Spulen (46, 56) aufweisen,
**dass** ein Temperatursensor (7) vorgesehen ist, welcher die Temperatur am Ort des Referenzelements (5) bestimmt,
**dass** die Elektronikeinheit an Hand des in dem Nutzsignal (NS) enthaltenen Störsignals (S) die Temperaturdifferenz zwischen dem Wandlerelement (41) und dem Referenzelement (5) bestimmt,
und
**dass** die Elektronikeinheit an Hand der Temperatur am Ort des Referenzelements (5) und der Temperaturdifferenz die Temperatur des Wandlerelements (41, 46) bestimmt.

10. Vorrichtung nach einem der vorangehenden Ansprüche,
**dadurch gekennzeichnet,**
**dass** die Vorrichtung ein Über- oder Unterschreiten eines vorgegebenen Grenzwertes der Prozessgröße überwacht,
**dass** in der Elektronikeinheit der Vorrichtung für einen vorgegebenen Temperaturbereich, in welchem die Vorrichtung einsetzbar ist, Schwellwerte für die von der Prozessgröße abhängige Schwingungseigenschaft abgelegt sind, die die Schwingungseigenschaft beim Erreichen des Grenzwertes bei der jeweiligen Temperatur aufweist,
und
**dass** die Elektronikeinheit das Über- oder Unterschreiten des vorgegebenen Grenzwertes an Hand der im Temperaturmessbetrieb ermittelten Temperatur und dem dieser Temperatur zugeordneten Schwellwert überwacht.

11. Vorrichtung nach Anspruch 7,
**dadurch gekennzeichnet,**
**dass** die Elektronikeinheit die elektromechanische Wandlereinheit (4) und das Referenzelement (5) in einem Temperaturmessbetrieb mit einem Hilfssignal (HS) beaufschlagt, welches eine Frequenz aufweist, die außerhalb eines Resonanzbereichs um die Resonanzfrequenz der schwingfähigen Einheit (3) liegt, und zumindest aus dem bei Beaufschlagung mit dem Hilfssignal (HS) aus dem Empfangssignal (ES) und dem Referenzsignal (RS) extrahierten Nutzsignal (NS) die Temperatur des Wandlerelements (41, 46) bestimmt.

## Claims

1. Apparatus (1) for determining and/or monitoring at least one process variable of a medium (21) in a vessel (2), with
- a unit capable of mechanical vibration (3),
- a electromechanical transducer unit (4), which has at least a piezoelectric transducer element (41) or an inductive transducer element (46), which causes the unit capable of vibration (3) to vibrate mechanically using an excitation signal (AS), and which receives vibrations from the unit capable of vibration (3) and converts them into an electrical reception signal (ES), wherein the reception signal (ES) represents a superimposition consisting of a useful signal (NS) that reflects the vibrations and a error signal,
- a reference element (5) with a first component (52) with an electrically adjustable variable, wherein the reference element (5) is switched in parallel with the electromechanical transducer unit (4) and is exposed to the same excitation signal (AS), and generates a reference signal (RS) that is not affected by the vibrations of the unit capable of vibration (3),
- and an electronic unit which extracts the useful signal (NS) from the reception signal (ES) and the reference signal (RS) when the electromechanical transducer unit (4) and reference element (5) are exposed to the excitation signal (AS), and determines and/or monitors the process variable using the useful signal (NS),
**characterized in that**
the electromechanical transducer unit (4) has a second component (42) with an electrically adjustable variable.

2. Apparatus as claimed in Claim 1,
**characterized in that**
the second component (42) is electrically switched in series with the piezoelectric transducer element (41) or the inductive transducer element (46).

3. Apparatus as claimed in Claim 1 or 2,
**characterized in that**
the first component (52) and the second component (42) are both an adjustable resistor, particularly a digital potentiometer.

4. Apparatus as claimed in one of the previous claims,
**characterized in that**
the variable of the second component (42) can be adjusted in such a way that the electromechanical transducer unit (4) has a predefinable time constant.

5. Apparatus as claimed in one of the previous claims,
**characterized in that**
in the case that the transducer unit (4) has at least one piezoelectric transducer element (41), the reference element (5) has at least one capacitor (51) or at least one piezoelectric element (53, 54)
and **in that**, in the case that the transducer unit (4) has at least one inductive transducer element (46), the reference element (5) has at least one coil (56).

6. Apparatus as claimed in one of the previous claims,
**characterized in that**
the electronic unit has a control unit (61) which regulates the variable of the first component (52) to the value at which a level of an error signal (S) is minimal in the useful signal (NS) extracted from the reception signal (ES) and the reference signal (RS).

7. Apparatus as claimed in one of the previous claims,
**characterized in that**
the electronic unit determines the temperature of the piezoelectric or inductive transducer element (41, 46).

8. Apparatus as claimed in Claim 6 or 7,
**characterized in that,**
the electronic unit has a memory unit (62) in which a characteristic curve is saved, which reflects a dependency of the regulated value of the variable of the first component (52) on the temperature of the transducer element (41, 46) in such a way that the temperature can be determined using the regulated value and the characteristic curve.

9. Apparatus as claimed in one of the previous claims,
**characterized in that**
the reference element (5) and the electromechanical transducer unit (4) have an identical number of piezoelectric elements (41, 42, 43, 53, 54) or coils (46, 56), **in that** a temperature sensor (7) is provided, said sensor determining the temperature at the site of the reference element (5),
**in that** the electronic unit uses the error signal (S) in the useful signal (NS) to determine the temperature difference between the transducer element (41) and the reference element (5),
and
**in that** the electronic unit determines the temperature of the transducer element (41, 46) using the temperature at the site of the reference element (5) and the temperature difference.

10. Apparatus as claimed in one of the previous claims,
**characterized in that**
the apparatus monitors when a predefined limit value of the process variable is exceeded or undershot,
threshold values for the vibration characteristic which depends on the process variable are saved in the electronic unit of the apparatus for a predefined temperature range in which the apparatus can be operated, said threshold values presenting the vibration characteristic when the limit value is reached at the specific temperature,
and
**in that** the electronic unit monitors whether the predefined limit value is exceeded or undershot using the temperature determined in the temperature measuring mode and the threshold value assigned to this temperature.

11. Apparatus as claimed in Claim 7,
**characterized in that**
in a temperature measuring mode the electronic unit exposes the electromechanical transducer unit (4) and the reference element (5) to an auxiliary signal (HS) which has a frequency which is outside a resonance range around the resonance frequency of the unit which is capable of vibration (3), and determines the temperature of the transducer element (41, 46) at least from the useful signal (NS) extracted from the reception signal (ES) and the reference signal (RS) during exposure with the auxiliary signal (HS).

## Revendications

1. Dispositif (1) destiné à la détermination et/ou la surveillance d'au moins une grandeur process d'un produit (21) dans un réservoir (2),avec
- une unité mécanique apte à vibrer (3),
- une unité de transducteur électromécanique (4), qui comporte au moins un élément transducteur piézoélectrique (41) ou un élément transducteur inductif (46), laquelle unité excite l'unité apte à vibrer (3) au moyen d'un signal d'excitation (AS) en vibrations mécaniques, et laquelle reçoit les vibrations de l'unité apte à vibrer (3) et les convertit en un signal de réception électrique (ES), le signal de réception (ES) représentant une superposition constituée d'un signal utile (NS) reflétant les vibrations et d'un signal parasite,
- un élément de référence (5) avec un premier composant (52) avec une grandeur réglable électriquement, l'élément de référence (5) étant commuté parallèlement à l'unité de transducteur électromécanique (4) et alimenté avec le même signal d'excitation (AS), et générant un signal de référence (RS) non influencé par les vibrations de l'unité apte à vibrer (3),
- et une unité électronique, laquelle extrait, en cas d'application du signal d'excitation (AS) à l'unité de transducteur électromécanique (4) et l'élément de référence (5), le signal utile (NS) à partir du signal de réception (ES) et du signal de référence (RS), et détermine et/ou surveille la grandeur process au moyen du signal utile (NS),
**caractérisé**
**en ce que** l'unité de transducteur électromécanique (4) comporte un deuxième composant (42) avec une grandeur électriquement réglable.

2. Dispositif selon la revendication 1,
**caractérisé**
**en ce que** le deuxième composant (42) est couplé électriquement en série avec l'élément transducteur piézoélectrique (41) ou l'élément transducteur inductif (46).

3. Dispositif selon la revendication 1 ou 2,
**caractérisé**
**en ce qu'**il s'agit, concernant le premier élément (52) et le deuxième composant (42), d'une résistance réglable, notamment d'un potentiomètre numérique.

4. Dispositif selon l'une des revendications précédentes,
**caractérisé**
**en ce que** la grandeur du deuxième composant (42) est réglable de telle sorte que l'unité de transducteur électromécanique (4) présente une constante de temps prédéfinissable.

5. Dispositif selon l'une des revendications précédentes,
**caractérisé**
**en ce que** l'élément de référence (5) présente, pour le cas où l'élément transducteur (4) comporte au moins un élément transducteur piézoélectrique (41), au moins un condensateur (51) ou au moins un élément piézoélectrique (53, 54) et en ce que l'élément de référence (5) présente, pour le cas où l'élément transducteur (4) comporte au moins un élément transducteur inductif (46), au moins une bobine (56).

6. Dispositif selon l'une des revendications précédentes,
**caractérisé**
**en ce que** l'unité électronique comporte un dispositif de régulation (61), lequel régule la grandeur du premier composant (52) à la valeur, à laquelle un niveau du signal parasite (S) est minimal dans le signal utile (NS) extrait à partir du signal de réception (ES) et du signal de référence (RS).

7. Dispositif selon l'une des revendications précédentes,
**caractérisé**
**en ce que** l'unité électronique détermine la température de l'élément transducteur piézoélectrique (41) ou inductif (46).

8. Dispositif selon la revendication 6 et 7,
**caractérisé**
**en ce que** l'unité électronique comporte une unité de mémoire (62), dans laquelle est mémorisée une courbe caractéristique, laquelle reflète une dépendance de la valeur régulée de la grandeur du premier composant (52) en fonction de la température de l'élément transducteur (41, 46), de telle sorte que la température puisse être déterminée au moyen de la valeur régulée et de la ligne caractéristique.

9. Dispositif selon l'une des revendications précédentes,
**caractérisé**
**en ce que** l'élément de référence (5) et l'unité de transducteur électromécanique (4) présentent un nombre égal d'éléments piézoélectriques (41, 42, 43, 53, 54) ou de bobines (46, 56),
**en ce qu'**est prévu un capteur de température (7), lequel détermine la température à l'emplacement de l'élément de référence (5),
**en ce que** l'unité électronique détermine au moyen du signal parasite (S) contenu dans le signal utile (NS) la différence de température entre l'élément transducteur (41) et l'élément de référence (5),
et
**en ce que** l'unité électronique détermine au moyen de la température à l'emplacement de l'élément de référence (5) et de la différence de température, la température de l'élément transducteur (41, 46).

10. Dispositif selon l'une des revendications précédentes,
**caractérisé**
**en ce que** le dispositif surveille un dépassement par excès ou par défaut d'une valeur seuil prédéfinie de la grandeur process,
**en ce que** sont enregistrés, dans l'unité électronique du dispositif pour une plage de températures prédéfinie dans laquelle le dispositif est utilisable, des valeurs seuils pour la caractéristique de vibration dépendant de la grandeur process, valeurs seuils que présente la caractéristique de vibration en cas d'atteinte de la valeur limite pour la température respective,
et
**en ce que** l'unité électronique surveille le dépassement par excès ou par défaut de la valeur limite prédéfinie au moyen de la température déterminée en mode de mesure de température, et de la valeur seuil attribuée à cette température.

11. Dispositif selon la revendication 7,
**caractérisé**
**en ce que** l'unité électronique alimente l'unité de transducteur électromécanique (4) et l'élément de référence (5), dans un mode de mesure de température, avec un signal auxiliaire (HS), lequel présente une fréquence qui se situe en dehors d'une plage de résonance autour de la fréquence de résonance de l'unité apte à vibrer (3), et détermine, en cas d'alimentation avec le signal auxiliaire (HS), au moins à partir du signal utile (NS), lequel est extrait du signal de réception (ES) et du signal de référence (RS), la température de l'élément de transducteur (41, 46).
